# EUROPÄISCHE PATENTSCHRIFT

(11) **EP 1 699 660 B1**
(45) Veröffentlichungstag und Bekanntmachung des Hinweises auf die Patenterteilung: **18.11.2009**
(21) Anmeldenummer: 04762459.8
(22) Anmeldetag: 22.07.2004
(51) Int. Cl.: B60K 31/00

(54) **GESCHWINDIGKEITSREGLER FÜR KRAFTFAHRZEUGE, MIT AUTOMATISCHER ABSCHALTFUNKTION**
SPEED REGULATOR FOR MOTOR VEHICLES, COMPRISING AN AUTOMATIC DISCONNECT FUNCTION
REGULATEUR DE VITESSE POUR VEHICULES AUTOMOBILES, COMPORTANT UNE FONCTION D'ARRET AUTOMATIQUE

(30) Priorität: 23.12.2003 DE 10360777
(43) Veröffentlichungstag der Anmeldung: 13.09.2006
(73) Patentinhaber: Robert Bosch GmbH, 70442 Stuttgart (DE)
(72) Erfinder: BRAEUCHLE, Goetz, 74934 Reichartshausen (DE); KROEHNERT, André, 98693 Unterpoerlitz (DE)
(86) Internationale Anmeldenummer: PCT/DE2004/001609
(87) Internationale Veröffentlichungsnummer: WO 2005/061264

(56) Entgegenhaltungen:
- EP-A- 1 304 251
- DE-A- 10 155 096
- DE-A- 19 958 520

## Beschreibung

### Stand der Technik

Die Erfindung betrifft einen Geschwindigkeitsregler für Kraftfahrzeuge, mit einer Stillstandsfunktion zum automatischen Halten des Fahrzeugs im Stand, und mit einer Abschaltfunktion zum automatischen Abschalten des Geschwindigkeitsreglers bei betätigtem Bremspedal.

Aus DE 199 58 120 A1 ist ein Beispiel eines Geschwindigkeitsreglers dieser Gattung bekannt, der einerseits einen sogenannten ACC-Modus (Adaptive Cruise Control) und andererseits eine Stillstandsfunktion, einen sogenannten Stop & Go Modus, aufweist.

Im ACC-Modus wird die Geschwindigkeit des Fahrzeugs auf eine vom Fahrer gewählte Wunschgeschwindigkeit geregelt, sofern die Fahrbahn vor dem eigenen Fahrzeug frei ist oder vorausfahrende Fahrzeuge schneller oder weit genug entfernt sind. Ein Abstandssensor, beispielsweise ein Radarsensor, gestattet es, vorausfahrende Fahrzeuge auf der eigenen Fahrspur und sonstige Hindernisse zu erkennen und die Geschwindigkeit erforderlichenfalls so anzupassen, daß das unmittelbar voraus fahrende Fahrzeug in einem angemessenen Sicherheitsabstand verfolgt wird. Der ACC-Modus ist generell für Fahrten auf Autobahnen oder gut ausgebauten Landstraßen bei flüssigem Verkehr vorgesehen, also für Verkehrssituationen, die durch eine relativ geringe Dynamik und relativ große Fahrzeugabstände gekennzeichnet sind.

Der Stop & Go Modus ist dagegen für den unteren Geschwindigkeitsbereich vorgesehen und bietet Funktionen, die im ACC-Modus nicht verfügbar sind, insbesondere die Funktion einer automatischen Abbremsung des eigenen Fahrzeugs in den Stand, etwa beim Auffahren auf ein Stauende. Unter bestimmten Bedingungen ist dann bei einigen Ausführungsformen auch ein automatisches Wiederanfahren möglich, wenn sich auch das vorausfahrende Fahrzeug wieder in Bewegung setzt. Diese Bedingungen sind beispielsweise erfüllt, wenn das eigene Fahrzeug nur relativ kurz gestanden hat und wenn das bisher verfolgte Zielobjekt, also das vorausfahrende Fahrzeug, ständig im Ortungsbereich des Abstandssensors geblieben ist. Unter anderen Bedingungen kann es dagegen zwecksmäßig sein, beim Anfahren des vorausfahrenden Fahrzeugs lediglich eine Anfahraufforderung an den Fahrer auszugeben und ihm selbst die letzte Entscheidung zu überlassen.

Die Wahl des Betriebsmodus erfolgt entweder automatisch oder mit Hilfe spezieller Bedienelemente (Moduswähltasten), mit denen der Fahrer entweder den ACC-Modus oder den Stop & Go Modus aktivieren und jeden dieser Modi deaktivieren kann.

Wenn der Fahrer durch Betätigung des Bremspedals aktiv in das Geschehen eingreift, so ist im allgemeinen davon auszugehen, daß eine Situation vorliegt, die mit den automatischen Funktionen des Reglers nicht zu beherrschen ist. Aus diesem Grund sind die bekannten Geschwindigkeitsregler bisher so konzipiert, daß die Regelfunktion sich automatisch abschaltet, sobald der Fahrer das Bremspedal betätigt, so daß keine Konflikte zwischen den Aktionen des Fahrers und den Aktionen des Geschwindigkeitsreglers auftreten können. Konsequenterweise läßt sich der Geschwindigkeitsregler dann auch nicht aktivieren, solange das Bremspedal betätigt ist, d.h., die Betätigung des Bremspedals bewirkt eine Aktivierungssperre.

Aus der EP 1304 251 A1, die den nächstliegenden Stand der Technik nach der Präambel von Anspruch 1 darstellt, ist ein Geschwindigkeitsregel-System mit. Abstandssensorik für ein Kraftfahrzeug bekannt, welches nicht nur bei höheren Fahrgeschwindigkeiten, sondern auch im Stop&Go-Betrieb automatisch die Einhaitung eines Mindestabstands zu einem vorausfahrenden Fahrzeug, das vom System als ein Zielobjekt erkannt ist, gewährleistet. Dabei stellt sich für den Fahrer des Kraftfahrzeugs eine einheitliche Systemstruktur dar, die nicht offensichtlich in verschiedene Geschwindigkeits-Bereiche unterteilt ist, obwohl das Geschwindigkeitsregel-System im Stop&Go- Betrieb auf einige Rand-Bedingungen anders reagiert als bei höheren Fahrgeschwindigkeiten. So ist nach Erreichen des Fahrzeug-Stillstands durch einen automatischen Abbrems-Vorgang das System nur durch eine komplexe Handlung des Fahrers abschaltbar und nicht durch eine einfache Betätigung der Betriebsbremse oder des Gaspedals. Andererseits ist das System aus dem Fahrzeug-Stillstand heraus bei dem Fahrer betätigter Betriebsbremse aktivierbar. Schließlich wird im Stop&Go-Bereich mit Erkennen eines sich in der voraussichtlichen Fahrspur befindenden stehenden Zielobjekts eine automatische Abbremsung mit im wesentlichen konstanter Verzögerung eingeleitet, wobei gleichzeitig der Fahrer auf diese Situation, in der mit Ausnahme der genannten Abbremsung das Geschwindigkeits-Regelsystem abgeschaltet wird, hingewiesen wird.

### Vorteile der Erfindung

Der erfindungsgemäße Geschwindigkeitsregler mit den in Anspruch 1 angegebenen Merkmalen hat demgegenüber den Vorteil, daß er dem Fahrer einen erhöhten Bedienkomfort bietet. Dies wird dadurch erreicht, daß die durch das betätigte Gaspedal bewirkte Abschaltfunktion zumindest unter bestimmten Bedingungen unwirksam gemacht wird, wenn das Fahrzeug steht oder nahezu steht. Da die Betätigung des Bremspedals durch den Fahrer in dieser Situation nicht die Funktion haben wird, das Fahrzeug zu verzögern, um etwaige Gefahrensituationen zu beherrschen, und da der Geschwindigkeitsregler aufgrund seiner Stillstandsfunktion in der Lage ist, das Fahrzeug im Stand zu halten und ein automatisches Wiederanfahren des Fahrzeugs allenfalls dann zu veranlassen, wenn die Verkehrssituation dies erlaubt, begegnet es keinen Sicherheitsbedenken, wenn der Geschwindigkeitsregler bei stehendem Fahrzeug aktiv bleibt. Der Fahrer bleibt es somit erspart, den Geschwindigkeitsregler von Hand wieder zu aktivieren, wenn er bei stehendem Fahrzeug oder in der Endphase des.automatisch gesteuerten Anhaltevorgangs absichtlich oder aus Versehen das Bremspedal betätigt hat.

Besonders vorteilhaft ist die Erfindung bei Fahrzeugen mit Automatikgetriebe, bei denen im Stand die Fahrzeugbremse gehalten werden muß, sofern sich der Getriebewählhebel nicht in der Neutralstellung oder der Parkstellung befindet. Wenn der Geschwindigkeitsregler sich abschaltet, muß der Fahrer das Bremspedal gedrückt halten, um das Fahrzeug im Stand zu halten. Durch die Erfindung wird vermieden daß sich der Geschwindigkeitsregler abschaltet und deshalb das Fahrzeug unvorhergesehen wieder anrollt, wenn der Fahrer unbedacht oder unabsichtlich das Bremspedal betätigt hat.

Vorteilhafte Ausgestaltungen und Weiterbildungen der Erfindung ergeben sich aus den Unteransprüchen.

In der erfindungsgemãßen Ausführungsform wird die Abschaltfunktion unwirksam, wenn das Fahrzeug wirklich steht, d.h., wenn die Geschwindigkeit exakt 0 ist.

Weiterhin wird die Abschaltfunktion erst dann außer Kraft gesetzt wird, wenn das Fahrzeug eine gewisse Zeit lang gestanden hat. Dadurch behält der Fahrer die Möglichkeit, den Geschwindigkeitsregler - wie im Fahrbetrieb - mit Hilfe des Bremspedals zu deaktivieren, indem er das Bremspedal während des Anhaltens des Fahrzeugs oder kurz danach betätigt.

Typischerweise ist die Stillstandsfunktion so ausgelegt, daß sie mehrere unterschiedliche Stillstandszustände aufweist. Wenn das Fahrzeug durch den Geschwindigkeitsregler automatisch in den Stand gebremst wurde, etwa weil das vordere Fahrzeug angehalten hat, so geht das System zunächst in einen aktiven Stillstandszustand über, aus dem das Fahrzeug automatisch, ohne Einwirkung des Fahrers wieder anfährt, wenn sich das vordere Fahrzeug wieder in Bewegung setzt. Nach einer längeren Standzeit geht das System dann jedoch in einen Wartezustand über, in dem ein erneutes Anfahren nur durch eine Aktion des Fahrers bewirkt werden kann, etwa durch Bestätigung eines vom System ausgegebenen Anfahrhinweises. Wenn die Abschaltfunktion außer Kraft gesetzt ist, geht der Geschwindigkeitsreglerbei Betätigung des Bremspedals vorzugsweise nicht in den aktiven Stillstandszustand, sondern in den Wartezustand über.

Bei der erfindungsgemäßen Variante, bei der die Abschaltfunktion erst nach einer gewissen Stillstandszeit des Fahrzeugs außer Kraft gesetzt wird, sollte diese Stillstandszeit nicht kürzer sein als die Verweilzeit, während der der Geschwindigkeitsregler im aktiven Stillstandszustand verbleibt. Wenn der Fahrer dann nach Ablauf dieser Zeit das Bremspedal betätigt, bleibt der Geschwindigkeitsregler zwar aktiv, doch befindet er sich dann nicht im aktiven Stillstandszustand, der ein automatisches Anfahren ohne Fahrerbestätigung erlaubt, sondern vielmehr im Wartezustand, in dem lediglich ein Anfahrhinweis ausgegeben wird.

In einer besonders bevorzugten Ausführungsform ist vorgesehen, daß sich unter den gleichen Bedingungen, unter denen die automatische Abschaltfunktion unwirksam ist, auch die Aktivierungssperre deaktiviert wird, so daß sich der Geschwindikeitsregler auch im Stand, bei betätigt gehaltenem Bremspedal, wieder aktivieren läßt.

Die automatische Abschaltfunktion braucht bei Betätigung des Bremspedals nicht völlig deaktiviert zu werden, sondern kann auch so modifiziert werden, daß die automatische Abschaltung des Geschwindigkeitsreglers nur noch dann erfolgt, wenn der Fahrer das Bremspedal länger als eine bestimmte Bremsdauer (beispielsweise 5 Sekunden) betätigt hält und/oder wenn die vom Fahrer ausgeübte Bremskraft oder der Gradient der Bremspedalbetätigung einen bestimmten Mindestwert übersteigt. So hat der Fahrer nach wie vor die Möglichkeit, den Geschwindigkeitsregler mit Hilfe des Bremspedals zu deaktivieren, doch wird die Gefahr vermieden, daß der Geschwindigkeitsregler, der das Fahrzeug automatisch im Stand hält, ungewollt deaktiviert wird, weil der Fahrer versehentlich am Bremspedal anstößt. Wenn aufgrund des Bremsdruckes und/oder der Bremsdauer eine Abschaltung erfolgt, sollte der Fahrer einen Hinweis, beispielsweise in der Form eines Warntons erhalten, so daß der Fahrer stets darüber informiert ist, ob der Geschwindigkeitsregler aktiv bleibt oder ob der Fahrer selbst mit Hilfe des Bremspedals das Fahrzeug im Stand halten muß.

Wahlweise kann eine Abschaltung auch dann erfolgen, wenn das Bremspedal innerhalb eines vorgegebenen Zeitraums (t = tₘᵢₙ - ∞) mehrfach betätigt wird.

### Zeichnung

Ausführungsbeispiele der Erfindung sind in den Zeichnungen dargestellt und in der nachfolgenden Beschreibung näher erläutert.

Es zeigen:
- Figur 1: ein Blockdiagramm des Geschwindigkeitsreglers und zuge- höriger Bedienungs- und Anzeigeelemente;
- Figur 2: ein Diagramm zur Erläuterung der Arbeitsweise des Ge- schwindigkeitsreglers; und
- Figur 3: ein Flußdiagramm zur Erläuterung eines alternativen Aus- führungsbeispiels.

### Beschreibung des Ausführungsbeispiels

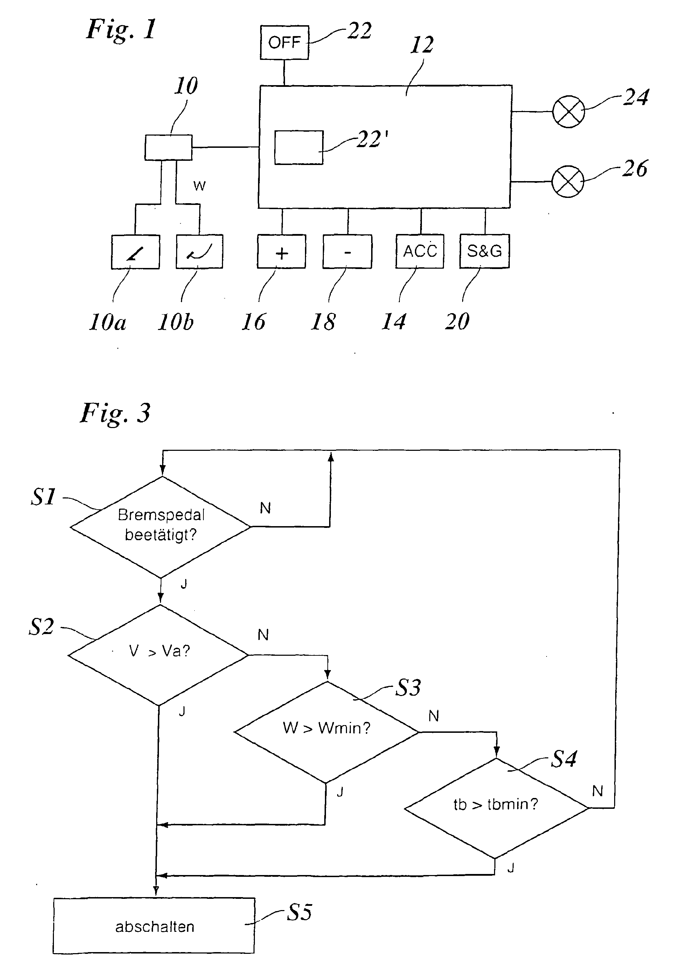

Da der Aufbau und die Wirkungsweise eines Geschwindigkeitsreglers mit ACC- und Stillstandsfunktion bekannt sind, zeigt Figur 1 lediglich die wichtigsten Komponenten in einem Blockdiagramm. Eine Sensoreinrichtung 10 umfaßt einen Abstandssensor, beispielsweise einen Radarsensor, der den Abstand und die Relativgeschwindtigkeit eines vorausfahrenden Fahrzeugs mißt. Sofern von dem Radarsensor mehrere Zielobjekte erfaßt werden, beispielsweise mehrere Fahrzeuge oder auch Standziele wie Straßenschilder und dergleichen, wird unter anderem durch Plausibilitätsauswertung ein Zielobjekt ausgewählt.

Zu der Sensoreinrichtung 10 gehören außerdem noch bekannte Sensoren, insbesondere Pedalsensoren für ein Fahrpedal 10a und ein Bremspedal 10b, sowie beispielsweise ein Fahrgeschwindigkeitssensor, Beschleunigungssensoren zur Erfassung der Längsbeschleunigung und der Querbeschleunigung, ein Giergeschwindigkeitssensor und dergleichen, die ohnehin im Fahrzeug vorhanden sind und deren Signale auch für andere Regelungszwecke genutzt werden. Die Signale des Abstandssensors und der übrigen Sensoren werden in einer elektronischen Steuereinrichtung 12 ausgewertet, die beispielsweise durch einen Mikrocomputer gebildet wird. Die Steuereinrichtung 12 wirkt auf das Antriebs- und Bremssystem des Fahrzeugs ein, um die Fahrgeschwindigkeit entweder auf eine vom Fahrer gewählte Wunschgeschwindigkeit oder auf einen geeigneten Abstand zum vorausfahrenden Fahrzeug zu regeln.

Diese Regelfunktion, im folgenden als ACC-Funktion bezeichnet, wird vom Fahrer durch Betätigen einer ACC-Taste 14 aktiviert. Wenn bereits früher eine Wunschgeschwindigkeit gespeichert war, hat das Betätigen der ACC-Taste die Funktion, daß die Regelung auf diese Wunschgeschwindigkeit wieder aufgenommen wird ("resume"). Andernfalls wird die Wunschgeschwindigkeit gesetzt, indem der Fahrer kurzzeitig eine Taste 16 betätigt, nachdem das Fahrzeug die gewünschte Geschwindigkeit erreicht hat. Weitere oder anhaltende Betätigung der Taste 16 bewirkt eine schrittweise Erhöhung der Wunschgeschwindigkeit. Entsprechend bewirkt die Betätigung einer Taste 18 eine schrittweise Absenkung der Wunschgeschwindigkeit.

Die ACC-Funktion schaltet sich selbsttätig aus, sobald die Geschwindigkeit des Fahrzeugs einen bestimmten Wert V₁ von beispielsweise 40 km/h unterschreitet. Sobald die Geschwindigkeit unterhalb eines größeren Wertes V₂ liegt, der beispielsweise 50 km/h beträgt, kann der Fahrer jedoch durch Betätigen einer S&G-Taste 20 eine Stop & Go Funktion aktivieren. Von dieser Möglichkeit wird der Fahrer beispielsweise dann Gebrauch machen, wenn er auf ein Stauende auffährt. Die Stop & Go Funktion (Stillstandsfunktion) bewirkt dann, daß das Fahrzeug automatisch in einem passenden Abstand vor dem Stauende zum Stillstand gebracht wird. Wenn das vor dem eigenen Fahrzeug haltende Fahrzeug ein Stück vor fährt, bewirkt die Stop & Go Funktion, daß das eigene Fahrzeug automatisch anfährt und seinerseits ein entsprechendes Stück vor fährt. Die Geschwindigkeit des eigenen Fahrzeugs wird dabei automatisch auf die Geschwindigkeit V₂ oder eine kleinere, vom Fahrer mit Hilfe der Tasten 16 und 18 gewählte Wunschgeschwindigkeit begrenzt.

In einer anderen Ausführungsform kann die Stillstandsfunktion so ausgelegt sein, daß sie lediglich das automatische Bremsen des Fahrzeugs in den Stand und das Halten des Fahrzeugs im Stand, jedoch kein automatisches Wiederanfahren ermöglicht. Ebenso ist eine Ausführungsform denkbar, bei der die Übergänge zwischen den Funktionen ACC und Stop & Go automatisch in Abhängigkeit von der Fahrzeuggeschwindigkeit gesteuert werden.

Mit einer Off-Taste 22 (Ausschalttaste) können die ACC-Funktion und die Stop & Go Funktion abgeschaltet werden.

Die Tasten 14, 16, 18, 20 und 22 können z. B. in einen Multifunktionshebel integriert sein, der beispielsweise am Lenkrad des Fahrzeugs angeordnet ist.

Anzeigelampen 24 und 26 informieren den Fahrer über den aktuellen Zustand der Funktionen ACC und Stop & Go. Ein Aufleuchten der Anzeigelampe 24 in gelber Farbe bedeutet, daß die ACC-Funktion zwar nicht aktiv aber unter den gegebenen Bedingungen mit Hilfe der ACC-Taste 14 aktivierbar ist. Ein Farbumschlag nach grün zeigt den aktiven Zustand der Funktion an. Entsprechendes gilt für die Anzeigelampe 26 und die Stop & Go Funktion.

Solange das Fahrzeug rollt, beispielsweise mit einer Geschwindigkeit von mindestens 2 bis 4 km/h hat, sorgt eine in die Steuereinrichtung 12 integrierte Abschaltfunktion 22 dafür, daß die Betätigung des Bremspedals 10b die gleiche Wirkung wie die Betätigung der Off-Taste 22 hat, nämlich die Deaktivierung der ACC- bzw. Stop & Go Funktion. Solange der Fahrer das Bremspedal 10b betätigt hält, ist demzufolge auch keine Aktivierung dieser Funktionen mit Hilfe der Taste 14 oder 20 möglich (Aktivierungssperre).

Wenn das Fahrzeug jedoch nahezu steht, d.h., wenn seine Geschwindigkeit kleiner oder gleich einer vorgegebenen Abschaltgeschwindigkeit Va (in der Größenordnung von 2 bis 4 km/h) ist, hat die Betätigung des Bremspedals 10b dagegen nicht die gleiche Funktion wie die Betätigung der Off-Taste 22, sondern der Geschwindigkeitsregler, speziell die Stop & Go Funktion, bleibt aktiv. Ebenso ist es unter diesen Bedingungen auch möglich, die Stop & Go Funktion mit Hilfe der S&G-Taste 20 auch bei betätigtem Bremspedal zu aktivieren, wenn diese Funktion zuvor inaktiv war.

Wenn der Geschwindigkeitsregler nicht aktiv ist, so bedeutet dies zumindest bei einem Fahrzeug mit Automatikgetriebe, daß der Fahrer das Bremspedal 10b betätigt halten muß, um das Fahrzeug im Stand zu halten. Wenn das Bremspedal 10b auch bei stehendem Fahrzeug die Wirkung einer Aktivierungssperre hätte, könnte somit die Stop & Go Funktion im Stand überhaupt nicht aktiviert werden. Dadurch, daß bei dem hier beschriebenen Geschwindigkeitsregler die Abschaltfunktion 22' und die Aktivierungssperre unwirksam sind, wenn die Geschwindigkeit unterhalb der Abschaltgeschwindigkeit Va liegt, wird ein für den Fahrer unerwartetes Anrollen des Fahrzeugs vermieden. Zugleich erhält der Fahrer die Möglichkeit, den Geschwindigkeitsregler auch im Stand zu aktivieren.

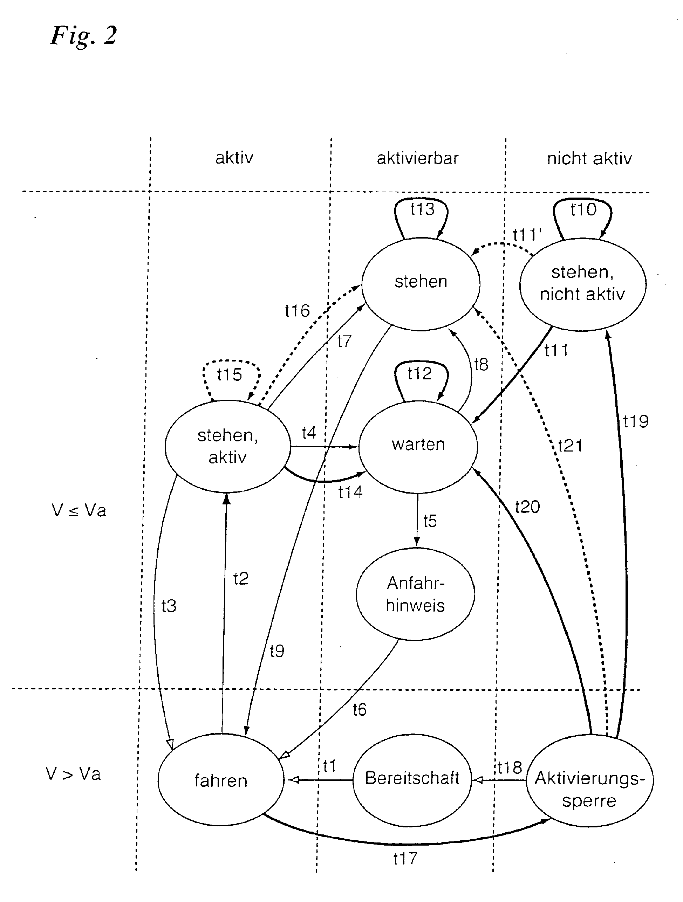

Die Funktionen des Geschwindigkeitsreglers, soweit sie für das Verständnis der Erfindung wesentlich sind, sollen nun anhand eines in Figur 2 gezeigten Zustandsdiagramms näher erläutert werden. Jede Ellipse in Figur 2 symbolisiert einen Zustand des Geschwindigkeitsreglers, und Pfeile zwischen den einzelnen Ellipsen stellen Übergänge zwischen den betreffenden Zuständen dar. Die fett eingezeichneten Pfeile symbolisieren Übergänge, die bei betätigtem Bremspedal 10b möglich sind. Pfeile mit einer nur als Umrahmung dargestellten und weiß ausgefüllten Pfeilspitze symbolisieren Übergänge, die bei betätigtem Bremspedal nicht möglich sind. Die Zustände sind in einer Tabelle mit den Spalten "aktiv", "aktivierbar" und "nicht aktiv" und den Zeilen "V s Va" und "V > Va" angeordnet. Der Einfachheit halber sind lediglich Zustände dargestellt, die sich auf die Stop & Go Funktion beziehen. Bei Zuständen in der Spalte "aktiv" ist die Stop & Go Funktion aktiv. Bei Zuständen in der Spalte "aktivierbar" ist die Funktion nicht, jedenfalls nicht in vollem Umfang aktiv, kann jedoch aktiviert werden. Bei Zuständen in der Spalte "nicht aktiv" ist die Stop & Go Funktion deaktiviert. Zustände in der Zeile "V > Va" können nur dann vorliegen, wenn die Geschwindigkeit V des Fahrzeugs größer ist als die Abschaltgeschwindigkeit Va. Die Zustände in der Zeile "V s Va" können dann auftreten, wenn das Fahrzeug nahezu steht.

Wenn das Fahrzeug mit einer Geschwindigkeit vom beispielsweise 25 km/h fährt und der Geschwindigkeitsregler nicht aktiv ist, so liegt der Zustand "Bereitschaft" vor. Durch Betätigen der Taste 20 kann der Fahrer dann die Stop & Go Funktion aktivieren, und das System geht gemäß Pfeil t1 in den Zustand "fahren" über. Sofern ein Zielobjekt, also ein vorausfahrendes Fahrzeug vorhanden ist, wird dieses Fahrzeug in angemessenem Abstand verfolgt. Wenn das Zielobjekt anhält, wird das mit dem Geschwindigkeitsregler ausgerüstete Fahrzeug automatisch in den Stand gebremst, entsprechend einem Übergang gemäß Pfeil t2 in den Zustand "stehen, aktiv". In diesem Zustand wird die Fahrzeugbremse automatisch durch den Geschwindigkeitsregler gehalten, so daß das Fahrzeug im Stand bleibt. Das System bleibt für eine vorgegebene Verweilzeit im Zustand "stehen, aktiv". Wenn sich das Zielobjekt innerhalb dieser Verweilzeit wieder in Bewegung setzt, fährt auch das eigene Fahrzeug automatisch wieder an, und das System geht gemäß Pfeil t3 wieder in den Zustand "fahren" über.

Wenn im Zustand "stehen, aktiv" die Verweilzeit abgelaufen ist, das Zielobjekt aber nach wie vor vorhanden ist, geht das System gemäß Pfeil t4 in einen Zustand "warten" über. Aus diesem Zustand kann das Fahrzeug nur nach Fahrerbestätigung wieder anfahren. Wenn sich das Zielobjekt wieder in Bewegung setzt, erfolgt ein Übergang über Pfeil t5 in den Zustand "Anfahrhinweis", und es wird ein Anfahrhinweis an den Fahrer ausgegeben, beispielsweise in der Form eines akustischen Signals. Wenn der Fahrer daraufhin innerhalb eines vorgegebenen Zeitintervalls den Anfahrwunsch bestätigt, beispielsweise durch Betätigung der S&G-Taste 20 oder der Taste 16 oder auch durch Betätigung des Gaspedals 10a, so fährt das Fahrzeug automatisch an, und der Geschwindigkeitsregler geht gemäß Pfeil t6 wieder in den Zustand "fahren" über.

Wenn im Zustand "stehen, aktiv" oder im Zustand "warten" das Zielobjekt verlorengeht, so erfolgt gemäß Pfeil t7 bzw. t8 ein Übergang in einen Zustand "stehen", aus nur durch Betätigung des Gaspedals (Pfeil t9) wieder ein Übergang in den Zustand "fahren" verlaßt werden kann.

Wenn im Zustand "fahren" die Off-Taste 22 betätigt wird, um den Geschwindigkeitsregler zu deaktivieren, so erfolgt ein Übergang in den Zustand "Bereitschaft" (nicht durch einen Pfeil dargestellt). Wenn in einem der Zustände, in denen das Fahrzeug nahezu steht, die Off-Taste 22 betätigt wird, so erfolgt ein Übergang in den Zustand "stehen, nicht aktiv". Gleichzeitig wird ein akustischer Hinweis ausgegeben, um dem Fahrer zu signalisieren, daß er nun das Bremspedal betätigen muß, um das Fahrzeug im Stand zu halten. Die Betätigung des Bremspedals, die für sich allein nicht zu einem Verlassen dieses Zustands führt, ist durch einen Pfeil t10 symbolisiert. Da die Aktivierungssperre in diesem Zustand nicht wirksam ist, kann der Fahrer jedoch bei betätigtem Bremspedal die S&G-Taste 20 drücken, um gemäß Pfeil t11 in den Zustand "warten" überzugehen. Alternativ kann die Betätigung der Taste 20 auch einen Übergang in den Zustand "stehen" (Pfeil t11') bewirken. Der Übergang in den Zustand "warten" hat jedoch den Vorteil, daß der Fahrer einen Anfahrhinweis erhält, wenn das vordere Fahrzeug anfährt. Falls kein Zielobjekt vorhanden ist, kehrt das System über Pfeil t8 in den Zustand "stehen" zurück. Wenn in einem der Zustände "warten" und "stehen" das Bremspedal betätigt wird (Pfeile t12 und t13), führt dies (anders als die Betätigung der Off-Taste 22) nicht zu einer Rückkehr in den Zustand "stehen, nicht aktiv", sondern das System bleibt in seinem jeweiligen Zustand.

Wenn im Zustand "stehen, aktiv" das Bremspedal betätigt wird, erfolgt vorzugsweise ein Übergang gemäß Pfeil t14 in den Zustand "warten". Alternativ kann das System jedoch auch im Zustand "stehen, aktiv" verbleiben (Pfeil t15) oder in den Zustand "stehen" übergehen (Pfeil t16).

Wenn im Zustand "fahren" das Bremspedal betätigt wird, erfolgt ein Übergang gemäß Pfeil t17 in den Zustand "Aktivierungssperre", und der Geschwindigkeitsregler wird deaktiviert. Solange das Bremspedal gedrückt ist, läßt sich während der Fahrt die Stop & Go Funktion nicht wieder aktivieren. Erst wenn der Fahrer das Bremspedal losläßt, erfolgt gemäß Pfeil t18 ein Übergang in den Zustand "Bereitschaft", in dem sich der Geschwindigkeitsregler wieder aktivieren läßt.

Wenn im Zustand "Aktivierungssperre" der Fahrer das Bremspedal gedrückt hält, sinkt die Geschwindigkeit schließlich unter Va, und ohne zusätzliche Aktionen des Fahrers erfolgt ein Übergang gemäß Pfeil t19 in den Zustand "stehen, nicht aktiv". Nachdem die Geschwindigkeit den Wert Va unterschritten hat, kann der Fahrer jedoch auch bei weiter gedrücktem Bremspedal die S&G-Taste 20 drücken und so erreichen, daß das System sofort wieder in den Zustand "warten" (Pfeil t20) oder, gemäß einer möglichen Alternative, in den Zustand "stehen" (Pfeil t21) übergeht.

Mögliche Abwandlungen des oben beschriebenen Ausführungsbeispiels sollen im folgenden unter Bezugnahme auf Figur 2 kurz dargestellt werden.

Die Abschaltgeschwindigkeit Va kann auch den Wert 0 haben. In diesem Fall sind die Aktivierungssperre und die Abschaltfunktion des Bremspedals nur dann wirksam, wenn das Fahrzeug wirklich steht.

Gemäß einer weiteren Modifikation bleiben die Aktivierungssperre und die Abschaltfunktion des Bremspedals noch während einer bestimmten Verzögerungszeit wirksam, nachdem das System gemäß Pfeil t2 in den Zustand "stehen, aktiv" übergegangen ist und das Fahrzeug zum Stillstand gekommen ist. Diese Verzögerungszeit hat vorzugsweise die gleiche Länge wie die Verweilzeit, während der das System in dem Zustand "stehen, aktiv" bleibt.

Dies hat zur Folge, daß die Übergänge t15 und t16 nicht möglich sind und statt dessen bei Betätigung des Bremspedals ein Übergang aus dem Zustand "stehen, aktiv" in den Zustand "stehen, nicht aktiv" erfolgen würde (Abschaltfunktion des Bremspedals). Nur wenn das Bremspedal betätigt wird, nachdem das System gemäß Pfeil t4 in den Zustand "warten" übergangen ist, ist die Abschaltfunktion unwirksam, und das System bleibt gemäß Pfeil t12 im Zustand "warten".

Die verzögerte Aufhebung der Abschaltfunktion und der Aktivierungssperre hat auch zur Folge, daß aus dem Zustand "Aktivierungssperre" lediglich ein Übergang in den Zustand "stehen, nicht aktiv" gemäß Pfeil t19 möglich ist, nicht hingegen ein direkter Übergang gemäß Pfeil t20 in den Zustand "warten". Auch der Übergang aus dem Zustand "stehen, nicht aktiv" in den Zustand "warten" gemäß Pfeil t11 ist in diesem Fall nur dann möglich, wenn das Fahrzeug eine Zeit lang, entsprechend der Verzögerungszeit, gestanden hat.

Bei den beschriebenen Ausführungsvarianten hat die Betätigung des Bremspedals 10b in den Zuständen "warten" und "stehen" und ggf. auch im Zustand "stehen, aktiv" nicht die gleiche Funktion wie die Betätigung der Off-Taste 20, d.h., sie führt nicht zu einer Deaktivierung des Geschwindigkeitsreglers. Wahlweise läßt sich der Geschwindigkeitsregler jedoch so modifizieren, daß in den Zuständen, in denen die Geschwindigkeit kleiner oder gleich Va ist, die Betätigungsdauer des Bremspedals gemessen wird und der Geschwindigkeitsregler deaktiviert wird, wenn die Betätigungsdauer einen bestimmten Schwellenwert übersteigt. Sofern das Bremspedal dann weiter betätigt gehalten wird, ist auch die Aktivierungssperre wirksam. Alternativ kann die Bedingung für die Deaktivierung des Geschwindigkeitsreglers und für das Wirksamwerden der Aktivierungssperre darin bestehen, daß die Betätigungskraft oder der Pedalweg des Bremspedals einen bestimmten Schwellenwert übersteigt. Ebenso sind geeignete Kombinationen dieser Bedingungen denkbar.

Figur 3 zeigt ein Ausführungsbeispiel, bei dem im Rahmen der Abschaltfunktion 22' geprüft wird, wie lange das Bremspedal 10b betätigt wird und wie groß der Pedalweg W des Bremspedals ist.

In Schritt S1 wird zyklisch geprüft, ob das Bremspedal betätigt ist. Wenn eine Betätigung des Bremspedals festgestellt wird (J), wird ein Zeitgeber ausgelöst, und in Schritt S2 geprüft, ob die Geschwindigkeit V des Fahrzeugs über der Abschaltgeschwindigkeit Va liegt. Wenn dies nicht der Fall ist, wenn also das Fahrzeug nahezu steht, wird in Schritt S3 weiter geprüft, ob der Pedalweg größer als ein bestimmter Schwellenwert Wmin ist. Wenn auch dies nicht der Fall ist, wird in Schritt S4 mit Hilfe des Zeitgebers geprüft, ob die Betätigungsdauer tb des Bremspedals größer als ein bestimmter Schwellenwert tbmin ist. Wenn auch diese Bedingung nicht erfüllt ist, erfolgt ein Rücksprung zu Schritt S1, und der Geschwindigkeitsregler bleibt bis auf weiteres aktiv. Nur bei einem positiven Ergebnis in einem der Schritte S2, S3 und S4 erfolgt eine Verzweigung zu Schritt S5, und die Abschaltfunktion wird ausgelöst.

## Patentansprüche

1. Geschwindigkeitsregler für Kraftfahrzeuge, mit einer Stillstandsfunktion zum automatischen Halten des Fahrzeugs im Stand, und mit einer Abschaltfunktion (22') zum automatischen Abschalten des Geschwindigkeitsreglers bei betätigtem Bremspedal (10b), wobei die Abschaltfunktion (22') unwirksam ist, wenn vorgegebene Bedingungen erfüllt sind, einschließlich der Bedingung, daß die Geschwindigkeit nicht größer als eine bestimmte Abschaltgeschwindigkeit (Va) ist, **dadurch gekennzeichnet, daß** die Abschaltgeschwindigkeit (Va) gleich 0 ist und daß eine weitere Bedingung für die Unwirksamkeit der Abschaltfunktion darin besteht, daß seit Stillstand des Fahrzeugs ein vorgegebenes Zeitintervall abgelaufen ist.

2. Geschwiridigkeitsregler nach Anspruch 1, **dadurch gekennzeichnet, daß** die Abschaltgeschwindigkeit größer als 0 aber kleiner als 10 km/h ist.

3. Geschwindigkeitsregler nach einem der vorstehenden Ansprüche, **dadurch gekennzeichnet, daß** unter den Bedingungen, unter denen die Abschaltfunktion (22') unwirksam ist, der Geschwindigkeitsregler auch bei betätigtem Bremspedal (10b) mit Hilfe eines Bedienelemente (20) aktivierbar ist.

4. Geschwindigkeitsregler nach einem der vorstehenden Ansprüche, **dadurch gekennzeichnet, daß** die Stillstandsfunktion einen Zustand "stehen, aktiv", in dem ein automatisches Anfahren des Fahrzeugs ohne Fahrereinwirkung möglich ist, und mindestens einen Zustand "warten" aufweist, in dem ein Wiederanfahren nur nach Fahrerbestätigung möglich ist, und daß der Geschwindigkeitsregler, wenn die vorgegebenen Bedingungen erfüllt sind, bei Betätigung des Bremspedals (10b) im aktiven Zustand und/oder bei Aktivierung mit betätigtem Bremspedal in den Zustand "warten" übergeht.

5. Geschwindigkeitsregler nach einem der vorstehenden Ansprüche, **dadurch gekennzeichnet, daß** die Abschaltfunktion (22'), auch wenn die vorgegebenen Bedingungen erfüllt sind, **dadurch** wirksam wird, daß das Bremspedal länger als eine vorgegebene Mindestdauer betätigt wird.

6. Geschwindigkeitsregler nach einem der Ansprüche 1 bis 4, **dadurch gekennzeichnet, daß** die Abschaltfunktion (22'), auch wenn die vorgegebenen Bedingungen erfüllt sind, **dadurch** wirksam wird, daß das Bremspedal innerhalb eines bestimmten Zeitintervalls mehrfach betätigt wird.

7. Geschwindigkeitsregler nach einem der Ansprüche 1 bis 4, **dadurch gekennzeichnet, daß** die Abschaltfunktion (22'), auch wenn die vorgegebenen Bedingungen erfüllt sind, **dadurch** wirksam wird, daß das Ausmaß oder der Gradient der Betätigung des Bremspedals größer als ein bestimmter Mindestwert ist

## Claims

1. Cruise controller for motor vehicles, having a stationary state function for automatically holding the vehicle in a stationary state, and having a deactivation function (22') for automatically deactivating the cruise controller when the brake pedal (10b) is activated, wherein the deactivation function (22') is inactive if predefined conditions are met, including the condition that the speed is not higher than a specific deactivation speed (Va), **characterized in that** the deactivation speed (Va) is equal to zero, and **in that** a further condition for inactivity of the deactivation function is that a predefined time interval has passed since the vehicle has been in the stationary state.

2. Cruise controller according to Claim 1, **characterized in that** the deactivation speed is higher than zero but lower than 10 km/h.

3. Cruise controller according to one of the preceding claims, **characterized in that** under the conditions under which the deactivation function (22') is inactive the cruise controller can be actuated even if the brake pedal (10b) is activated using an operator control element (20).

4. Cruise controller according to one of the preceding claims, **characterized in that** the stationary state function has a "stationary, active" state in which it is possible to automatically start the vehicle without driver intervention, and at least one "waiting" state in which it is possible to restart only after confirmation by the driver, and **in that**, if the predefined conditions are met, the cruise controller goes into the "waiting" state when the brake pedal (10b) is activated in the active state and/or in the case of actuation with an activated brake pedal.

5. Cruise controller according to one of the preceding claims, **characterized in that**, even if the predefined conditions are met, the deactivation function (22') becomes active by virtue of the fact that the brake pedal is activated for longer than a predefined minimum period.

6. Cruise controller according to one of Claims 1 to 4, **characterized in that**, even if the predefined conditions are met, the deactivation function (22') becomes active by virtue of the fact that the brake pedal is activated repeatedly within a certain time interval.

7. Cruise controller according to one of Claims 1 to 4, **characterized in that,** even if the predefined conditions are met, the deactivation function (22') becomes active by virtue of the fact that the degree or the gradient of activation of the brake pedal is greater than a certain minimum value.

## Revendications

1. Régulateur de vitesse pour véhicules automobiles, comprenant une fonction d'immobilisation pour retenir automatiquement le véhicule à l'arrêt et une fonction de désactivation (22') pour désactiver automatiquement le régulateur de vitesse lorsque la pédale de frein (10b) est actionnée, la fonction de désactivation (22') étant sans effet lorsque des conditions prédéfinies sont remplies, y compris la condition selon laquelle la vitesse n'est pas supérieure à une vitesse de désactivation (Va) donnée, **caractérisé en ce que** la vitesse de désactivation (Va) est égale à 0 et qu'une autre condition pour que la fonction de désactivation soit sans effet est qu'un intervalle de temps prédéfini se soit écoulé depuis l'immobilisation du véhicule.

2. Régulateur de vitesse selon la revendication 1, **caractérisé en ce que** la vitesse de désactivation est supérieure à 0, mais inférieure à 10 km/h.

3. Régulateur de vitesse selon l'une des revendications précédentes, **caractérisé en ce que** sous les conditions sous lesquelles la fonction de désactivation (22') est sans effet, le régulateur de vitesse peut également être activé lorsque la pédale de frein (10b) est actionnée à l'aide d'un élément de commande (20).

4. Régulateur de vitesse selon l'une des revendications précédentes, **caractérisé en ce que** la fonction d'immobilisation présente un état « à l'arrêt, actif » dans lequel un démarrage automatique du véhicule est possible sans intervention du conducteur et au moins un état « attendre » dans lequel un redémarrage du véhicule n'est possible qu'après une confirmation du conducteur et que le régulateur de vitesse, lorsque les conditions prédéfinies sont remplies, passe à l'état actif lorsque la pédale de frein (10b) est actionnée et/ou à l'état « attendre » lors d'une activation avec la pédale de frein actionnée.

5. Régulateur de vitesse selon l'une des revendications précédentes, **caractérisé en ce que** la fonction de désactivation (22') est rendue active même lorsque les conditions prédéfinies sont remplies par le fait que la pédale de frein est actionnée pendant plus longtemps qu'une durée minimale prédéfinie.

6. Régulateur de vitesse selon l'une des revendications 1 à 4, **caractérisé en ce que** la fonction de désactivation (22') est rendue active même lorsque les conditions prédéfinies sont remplies par le fait que la pédale de frein est actionnée plusieurs fois pendant un intervalle de temps donné.

7. Régulateur de vitesse selon l'une des revendications 1 à 4, **caractérisé en ce que** la fonction de désactivation (22') est rendue active même lorsque les conditions prédéfinies sont remplies par le fait que l'étendue ou le gradient d'actionnement de la pédale de frein est supérieur à une valeur minimale donnée.
